# EUROPEAN PATENT SPECIFICATION

(11) **EP 1 458 465 B1**
(45) Date of publication and mention of the grant of the patent: **16.05.2007**
(21) Application number: 02789012.8
(22) Date of filing: 13.12.2002
(51) Int. Cl.: B01D 65/00, B01D 63/12, B01D 63/04

(54) **MEMBRANE FILTER, SYSTEM COMPRISING, AND METHOD OF USING THE SAME**
MEMBRANFILTER, SYSTEM DIESEN ENTHALTEND, UND VERFAHREN ZU DESSEN VERWENDUNG
FILTRE A MEMBRANES, ET SYSTÈME ET MÉTHODE L'UTILISANT

(30) Priority: 14.12.2001 NL 1019565
(43) Date of publication of application: 22.09.2004
(73) Proprietor: Norit Membraan Technologie B.V., 7554 TS Hengelo (NL)
(72) Inventor: KNOPS, Franciscus, Nicolaas, Marie, NL-7491 CM Delden (NL)
(74) Representative: Kupecz, Arpad
(86) International application number: PCT/NL2002/000830
(87) International publication number: WO 2003/051497

(56) References cited:
- EP-A- 1 266 680
- WO-A-97/47375
- ES-U- 1 047 795
- ES-U- 1 047 914
- ES-U- 1 048 685
- GB-A- 1 566 675
- US-A- 4 293 419
- US-A1- 2002 074 277
- PATENT ABSTRACTS OF JAPAN vol. 1999, no. 10, 31 August 1999 (1999-08-31) -& JP 11 128697 A (KURITA WATER IND LTD), 18 May 1999 (1999-05-18) -& DATABASE WPI Derwent Publications Ltd., London, GB; AN 1999-351070 XP002212318 & JP 11 128697 A
- PATENT ABSTRACTS OF JAPAN vol. 2000, no. 13, 5 February 2001 (2001-02-05) -& JP 2000 300967 A (KURITA WATER IND LTD), 31 October 2000 (2000-10-31) -& DATABASE WPI Derwent Publications Ltd., London, GB; AN 2001-084491 XP002212319 & JP 2000 300967 A
- PATENT ABSTRACTS OF JAPAN vol. 2000, no. 25, 12 April 2001 (2001-04-12) -& JP 2001 219038 A (KURITA WATER IND LTD), 14 August 2001 (2001-08-14)
- PATENT ABSTRACTS OF JAPAN vol. 1999, no. 13, 30 November 1999 (1999-11-30) -& JP 11 207153 A (KURITA WATER IND LTD), 3 August 1999 (1999-08-03) -& DATABASE WPI Derwent Publications Ltd., London, GB; AN 1999-486987 XP002212320 & JP 11 207153 A
- KARELIN F N ET AL: "NEW SOLUTIONS FOR CONSTRUCTION OF PRESSURE-DRIVEN MEMBRANE EQUIPMENT" DESALINATION, ELSEVIER SCIENTIFIC PUBLISHING CO, AMSTERDAM, NL, vol. 108, no. 1/3, 1 February 1997 (1997-02-01), pages 315-324, XP000782070 ISSN: 0011-9164
- PATENT ABSTRACTS OF JAPAN vol. 018, no. 525 (C-1257), 5 October 1994 (1994-10-05) -& JP 06 182163 A (KURITA WATER IND LTD), 5 July 1994 (1994-07-05) -& DATABASE WPI Derwent Publications Ltd., London, GB; AN 1994-251832 XP002212321 & JP 06 182163 A
- PATENT ABSTRACTS OF JAPAN vol. 2000, no. 22, 9 March 2001 (2001-03-09) -& JP 2001 137672 A (TORAY IND INC), 22 May 2001 (2001-05-22) -& DATABASE WPI Derwent Publications Ltd., London, GB; AN 2001-460224 XP002212322 & JP 2001 137672 A
- PATENT ABSTRACTS OF JAPAN vol. 1996, no. 01, 31 January 1996 (1996-01-31) -& JP 07 232037 A (HITACHI LTD;OTHERS: 01), 5 September 1995 (1995-09-05) -& DATABASE WPI Derwent Publications Ltd., London, GB; AN 1995-339401 XP002212323 & JP 07 232037 A

## Description

The present invention relates to a dead-end membrane filter as mentioned in the preamble of claim 1. The invention also relates to a system comprising and a method using such a dead-end membrane filter.

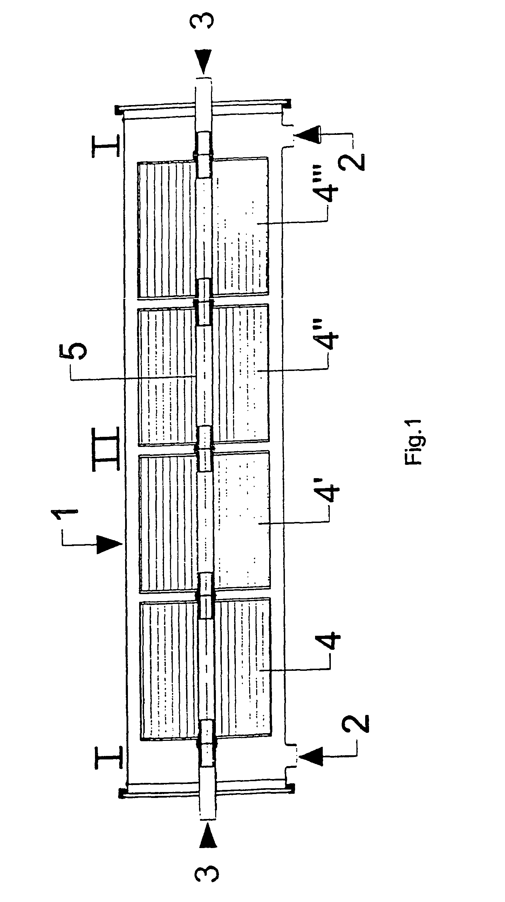

Membrane filters are generally known in practice. In such prior art membrane filter a plurality of membrane modules is placed in a housing such that in the direction of flow, they lie substantially in each others extended direction. A membrane filter of this kind is shown in Figure 1. It can be clearly seen that the connections for the inlet of fluid to be filtered and for the outlet of permeate of said known membrane filters are located at the ends of the housing.

However, these known membrane filters have several drawbacks. The first is that the membrane flux through the various membrane modules in the housing is not the same. At reference numeral 2 the feed is let into the housing 1 and at reference numeral 3 the permeate is discharged. For filtration, the feed will therefore be conducted through the membrane modules 4, 4', 4", 4''' to the central permeate conduit 5. Consequently, the pressure at the feed side is the highest near I and the lowest near II. Correspondingly, the pressure is the lowest at the permeate side near I and the highest near II. The membrane flux is driven by the local pressure difference over the membrane (transmembrane pressure difference, TMD) and equals the feed pressure minus the permeate counterpressure. Due to pressure losses, this TMD will clearly be greater near I than near II. These pressure differences are caused by the counter-oriented pressure reductions occurring at the feed side and permeate side in the membrane filter modules. Due to the irregular membrane flux, the terminal modules will foul more heavily and will therefore be subjected to a greater mechanical load. The more centrally placed membranes will initially contribute less to the filtration. Moreover, such an irregular membrane flux will lead to the problem that during cleaning not all the membrane modules will be cleaned equally well. This has a negative effect on the entire productivity of the membrane filtering installation.

Reference is especially made to WO 97/47375A that constitutes the closest prior art. This publication relates to a dead-end filtration system as indicated in the preamble of claim 1 and provides for an equalization of pressure in the filter housing. Feed inlets are located at the ends of the housing whereas additional feed inlets are located between said ends. However, it does not provide for the same pressure difference over all membrane filter modules in the housing. Therefore, the flow rate is not the same through all membrane filter modules, as a consequence of which the fouling will be irregular. Since a backwashing will be performed with an irregular pressure difference over the membrane filter modules, the effect of the backwashing will be irregular as well.

Reference is also made to ES 1 048 685 U. This publication relates to joining filter elements by using special connections that eliminate the need of housings for the filter elements. No dead-end mode is envisaged.

The object of the invention is to provide an improved membrane filter that does not exhibit the aforementioned drawbacks. A particular object of the invention is to provide an improved membrane filter having a regular membrane flux. The object of the invention is finally to provide a membrane filter that simplifies the construction and the continued operation of a filter installation using such membrane filters.

In order to realise the above mentioned objectives, the invention provides a membrane filter of claim 1. The membrane filter according to the invention has a number of advantages. The most important advantage is an even pressure difference of the feed side relative to the permeate side, irrespective of the position in the housing. Another advantage is the spatial separation between the feed conduits and the permeate conduits.

The membrane filter according to the invention is applied with "dead end" filtration. If, as may in practice be taken as starting point, all the membrane modules have an equal pressure drop, then all the modules will have a same transmembrane pressure and consequently a same membrane flux. This provides a very even load throughout the entire installation. Also in this case, all the membrane modules will exhibit substantially the same degree of fouling. This means that the membrane modules can be cleaned more reliably. An extra advantage of the invention is that because the pressure difference of the feed side compared with that of the permeate side is the same, the pressure losses no longer contribute to an uneven distribution of the membrane flux over the individual modules. Consequently it is not necessary to minimise the pressure losses of individual modules.

Another embodiment entails the provision of feed inlets at both ends of the membrane filter housing, and of a permeate outlet at a position substantially in the middle of the membrane filter housing.

The invention also provides a filter system in which at least one membrane filter according to the invention is applied. Preferably a filter system is used of the kind in which several membrane filters according to the invention are used. The respective feed inlets may then be coupled to a common feed conduit such that the flow approaches the respective membrane filter housings successively.

### Further preferred embodiments are mentioned in the dependent claims.

Herein below the invention will be further explained with reference to the appended drawings. The figures represent preferred embodiments of the invention without limiting the invention thereto.

Figure 1 shows a membrane filter housing according to the prior art.

Figures 2, 2A and 2B show a membrane filter according to a first embodiment.

Figure 3 shows a membrane filter according to a second embodiment of the invention.

Figure 4 shows a membrane filter housing according to the invention during cleaning.

Figure 1 shows a membrane filter 1 according to the prior art. Provided are feed connections 2 and permeate outlet connections 3. The fluid to be filtered streams through the membrane modules 4, 4', 4", 4"' and is discharged via the permeate conduit 5.

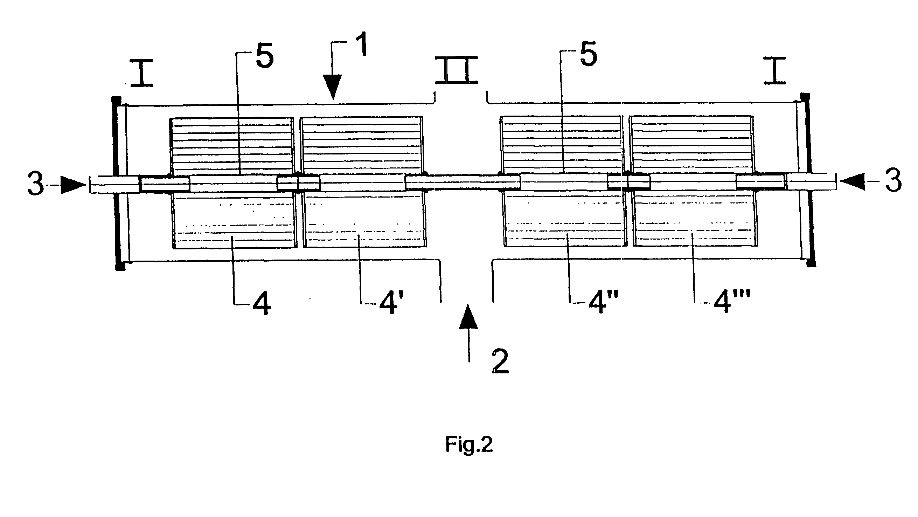

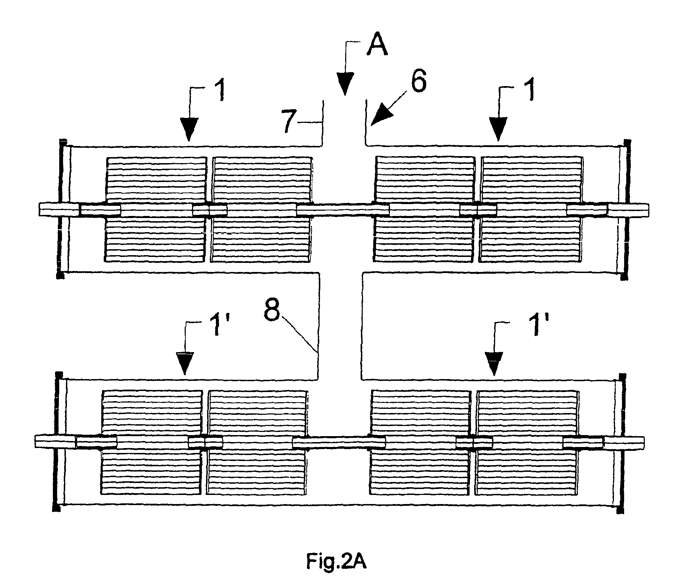

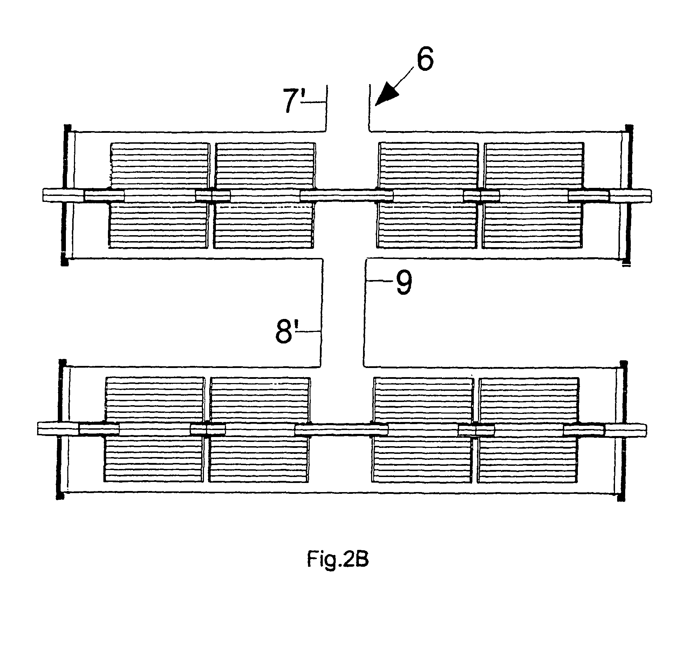

In accordance with the invention, a first embodiment provides a membrane filter as shown in Figure 2. The housing 1 comprises a plurality of modules 4, 4', 4" and 4"', and a central permeate conduit 5. The feed is supplied via the feed connection 2 and permeate is discharged via permeate outlet 3. Although the permeate conduit 5 is embodied continuous, it may optionally be omitted at position II. When fluid to be filtered is supplied at the inlet 2, it will penetrate through the membrane modules 4' and 4, and 4'' and 4''', respectively, reach the permeate conduit 5 and will subsequently exit the housing via 3. Filtration is effected as a result of the transmembrane pressure difference between the feed side and the permeate side. The pressure difference is the driving force. Because of pressure losses in the membrane modules, the pressure will be higher at the feed side near II than near I. Accordingly, the pressure will be higher in the permeate conduit near II than near I. This results in the pressure difference being substantially constant over the entire membrane filter. This provides a very constant membrane flux over the entire membrane filter.

Figure 2A shows a filter system wherein two of the membrane filters shown in Figure 2 are linked together. Feed is supplied via the central feed conduit 6. The arrow A indicates the direction of flow of the feed through the central feed conduit 6. Initially feed will reach the membrane filter 1 and subsequently the membrane filter 1'. As the feed rate near position 7 will be greater than near position 8, the diameter of the feed conduit 6 is preferably designed to be larger at position 7. If the membrane filters 1 and 1' are identical, the flow rate near position 7 will generally be twice as large as near position 8. Therefore, near position 7 the diameter of the feed conduit 6 will preferably be so much larger than near position 8, that the velocity of the flow of the feed is constant.

Since in general it is construction-technically awkward to provide the central feed conduit 6 with a diameter different to that of the membrane filter housing 1 if the latter is directly connected thereto, as shown in Figure 2A, the connection of the membrane filter housing to the common feed conduit 6 is preferably embodied as shown in Figure 2B. In this way it is simple to adjust the diameter as desired. For example, it is possible to embody the feed conduit near position 9, as shown in Figure 2B, conical (not shown) for a gradual transition from the larger diameter (not shown) near 7' to the smaller diameter (not shown) near 8'.

Of course, the invention is not limited to the filter system combining only two membrane filters 1, 1' into one filter system. It is also possible to combine more membrane filters to obtain a filter system with many membrane filters, e.g. an embodiment wherein four membrane filter housings are combined into one filter system. However, in such a case it will be particularly preferred to adapt the diameter of the common feed conduit 6 to the amount of feed to be conducted therethrough, as is shown in Figure 2B.

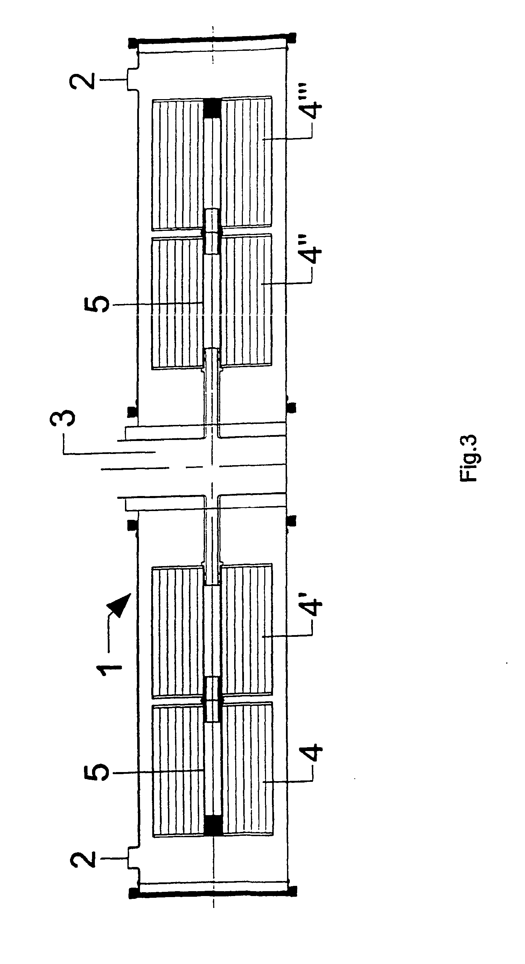

Figure 3 shows another embodiment of the membrane filter according to the invention, wherein feed inlet connections 2 are provided at the ends of a membrane filter housing 1, and a permeate outlet 3 in the middle of the filter housing 1. The principle of operation of a membrane filter according to Figure 3 is substantially the same as that of Figure 2. But the direction of flow through the membrane modules is reversed.

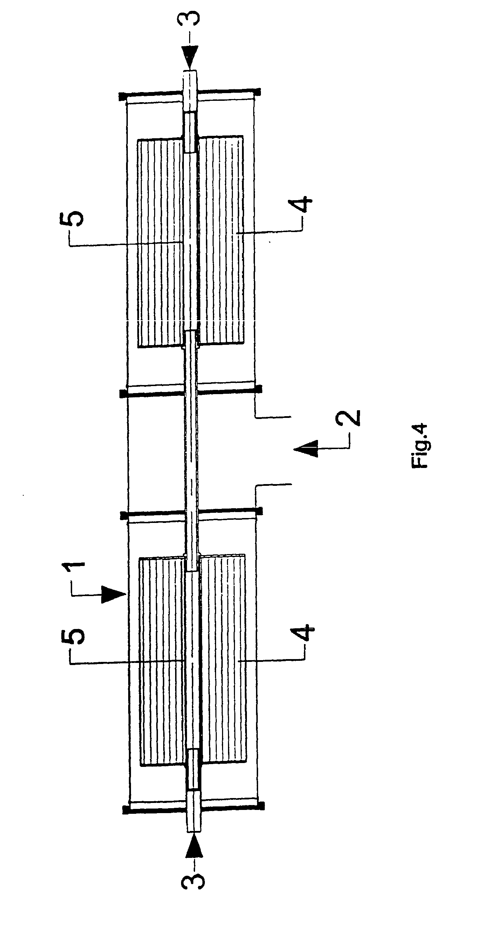

Figure 4 shows an embodiment in which the filtering apparatus according to Figure 2 is being rinsed. To this end rinse water is supplied near the permeate outlet 3, flows via the permeate conduit 5 through the membrane modules 4 and exits the apparatus via the feed inlet 2. The system as shown in Figure 3 can be cleaned similarly by back-flushing permeate.

To a person skilled in the art it is, moreover, obvious that the direction of filtration can be reversed. In the Figures 1-3 filtration takes place from the inside to the outside. This means that the feed is at the inside of the membrane while the permeate is at the outside. When the filtering apparatus is reversed, feed will be at the outside and the permeate at the inside (see Figure 4). Rinsing of the installation will then take place in reversed direction.

The invention is defined by the claims and is not limited to the embodiments shown in the figures.

## Claims

1. A dead-end membrane filter, comprising a housing (1) with a feed inlet (2), a permeate outlet (3) and at least two membrane filter modules (4, 4', 4", 4"') provided in the housing (1), wherein a fluid to be filtered is fed via the feed inlet (2) to the membrane filter modules (4, 4', 4", 4"'), and a permeate stream is discharged via the permeate outlet (3), **characterised in that**:
a) the feed inlet (2) is located at a position in the middle of the membrane filter housing (1) and the permeate outlet (3) consists of outlets located at the two ends of the membrane filter housing (1), or
b) the feed inlet (2) consists of inlets provided at both ends of the membrane filter housing (1) and the permeate outlet (3) is located at a position substantially in the middle of the membrane filter housing (1).

2. A filter system, **characterised in that** it comprises at least one dead-end membrane filter according to claim 1.

3. A filter system according to claim 2, **characterised in that** it comprises dead-end membrane filters according to claim 1, each of which being coupled with the respective feed inlet to a common feed conduit, such that the flow approaches the respective membrane filters successively.

4. A filter system according to claim 3, **characterised in that** the diameter of the common feed conduit decreases in the direction of flow.

5. A filter system according to claim 4, **characterised in that** the diameter decreases such that the velocity of the flow of the liquid to be filtered is substantially constant in the entire common feed conduit.

6. A method of filtering a liquid by means of dead-end filtration, **characterised in that** the same uses a dead-end membrane filter according to claim 1, or a filter system according to one of the preceding claims 2 to 5.

## Patentansprüche

1. Dead-end-Membranfilter, umfassend ein Gehäuse (1) mit einem Zulaufeinlass (2) und einem Permeatauslass (3) und wenigstens zwei Membranfiltermodule (4, 4', 4", 4"'), die in dem Gehäuse (1) angeordnet sind, wobei ein zu filtrierendes Fluid über den Zulaufeinlass (2) den Membranfiltermodulen (4, 4', 4", 4"') zugeleitet und ein Permeatstrom über den Permeatauslass (3) abgeleitet wird, **dadurch gekennzeichnet, dass**:
a) der Zulaufeinlass (2) an einer Stelle in der Mitte des Membranfiltergehäuses (1) angeordnet ist und der Permeatauslass (3) aus Auslässen besteht, die sich an den beiden Enden des Membranfiltergehäuses (1) befinden, oder
b) der Zulaufeinlass (2) aus Einlässen besteht, die an beiden Enden des Membranfiltergehäuses (1) vorgesehen sind, und der Permeatauslass (3) an einer Stelle im Wesentlichen in der Mitte des Membranfiltergehäuses (1) angeordnet ist.

2. Filtersystem, **dadurch gekennzeichnet, dass** es wenigstens einen Dead-end-Membranfilter nach Anspruch 1 umfasst.

3. Filtersystem nach Anspruch 2, **dadurch gekennzeichnet, dass** es Dead-end-Membranfilter nach Anspruch 1 umfasst, von denen jeder über einen jeweiligen Zulaufeinlass mit einer gemeinsamen Zulaufleitung verbunden ist, so dass der Fluidstrom die jeweiligen Membranfilter nacheinander erreicht.

4. Filtersystem nach Anspruch 3, **dadurch gekennzeichnet, dass** der Durchmesser der gemeinsamen Zulaufleitung in der Strömungsrichtung abnimmt.

5. Filtersystem nach Anspruch 4, **dadurch gekennzeichnet, dass** der Durchmesser derart abnimmt, dass die Strömungsgeschwindigkeit der zu filtrierenden Flüssigkeit in der gesamten gemeinsamen Zulaufleitung im Wesentlichen konstant ist.

6. Verfahren zur Filtration einer Flüssigkeit mittels Dead-end-Filtration, **dadurch gekennzeichnet, dass** in dem Verfahren ein Dead-end-Membranfilter nach Anspruch 1 oder ein Filtersystem nach einem der vorhergehenden Ansprüche 2 bis 5 verwendet wird.

## Revendications

1. Filtre à membranes à filtration frontale, comprenant une enveloppe (1) avec une entrée d'alimentation (2), une sortie de perméat (3) et au moins deux modules de filtre à membranes (4, 4', 4", 4"') installés dans l'enveloppe (1), dans lequel un fluide à filtrer est acheminé par l'intermédiaire de l'entrée d'alimentation (2) vers les modules de filtre à membranes (4, 4', 4", 4"'), et un courant de perméat est déchargé par l'intermédiaire de la sortie de perméat (3), **caractérisé en ce que** :
a) l'entrée d'alimentation (2) est située dans une position au milieu de l'enveloppe de filtre à membranes (1), et la sortie de perméat (3) est formée par des sorties situées aux deux extrémités de l'enveloppe de filtre à membranes (1), ou
b) l'entrée d'alimentation (2) est formée par des entrées installées aux deux extrémités de l'enveloppe de filtre à membranes (1), et la sortie de perméat (3) est située dans une position sensiblement au milieu de l'enveloppe de filtre à membranes (1).

2. Système de filtre, **caractérisé en ce qu'**il comprend au moins un filtre à membranes à filtration frontale selon la revendication 1.

3. Système de filtre selon la revendication 2, **caractérisé en ce qu'**il comprend des filtres à membranes à filtration frontale selon la revendication 1, chacun de ceux-ci étant couplé par l'entrée d'alimentation respective à un conduit d'alimentation commun, de telle sorte que l'écoulement se rapproche des filtres à membranes respectifs de façon successive.

4. Système de filtre selon la revendication 3, **caractérisé en ce que** le diamètre du conduit d'alimentation commun diminue dans la direction de l'écoulement.

5. Système de filtre selon la revendication 4, **caractérisé en ce que** le diamètre diminue de telle sorte que la vitesse de l'écoulement du liquide à filtrer soit sensiblement constante dans la totalité du conduit d'alimentation commun.

6. Procédé pour filtrer un liquide au moyen d'une filtration frontale, **caractérisé en ce qu'**il utilise un filtre à membranes à filtration frontale selon la revendication 1, ou un système de filtre selon l'une des revendications 2 à 5 précédentes.
